# EUROPEAN PATENT APPLICATION

(11) **EP 2 775 440 A1**
(43) Date of publication of application: **10.09.2014**
(21) Application number: 13290043.2
(22) Date of filing: 06.03.2013
(51) Int. Cl.: G06Q 20/40

(54) **Fraud decision processing system and method**

(71) Applicant: Amadeus S.A.S., 06410 Biot (FR)
(72) Inventor: Canis, Laure, 06300 Nice (FR); Florimond, Cedric, 06220 Vallauris (FR)
(74) Representative: Samson & Partner

(57) **Abstract**

The present invention relates to a method and system for performing fraud screening and choosing whether to accept or deny an online transaction. The system includes a server that receives a transaction request and performs a first fraud screen based on transaction information of the requested transaction. The server further determines which operation to perform: whether to issue a final response right away (accept, reject) or whether to gather more information before issuing a final response. The first fraud screening may be a predictive fraud screening which generates a probability of fraud. The information gathering may be an authentication of the payment instrument. One aspect of the invention further provides selecting an operation flow based on the transaction information.

## Description

### TECHNICAL FIELD

The present invention relates to a method and system for performing fraud screening and choosing whether to accept or deny an online transaction.

### BACKGROUND

Merchants need to reduce the number of fraudulent transactions because when a fraud occurs, they are responsible for reimbursing the amounts of fraudulent transactions to the real credit card holder. Thus, a payment system performs a fraud screening to reduce fraud. Based on transaction information such as the amount of the transaction, location of the sale, IP address of the requesting device, whether the credit card is on a black list and even data on repeated transactions with the same credit card number, email, or name (velocity checks), the fraud screening service provider may deny the requested transaction, allow the requested transaction, or direct the requester for manual review. For a manual review, the system waits for additional information.

In an example of airline ticket purchase, the transaction information may further include the origin, destination, and time before departure.

One type of online fraud screening is a predictive fraud screening, where the system does not rely on rules input by the merchant to determine which result to output, but builds predictive models for detecting fraud based on historical information. The system then determines a probability of fraud based on this predictive model and the transaction information.

While these existing fraud screening systems decrease the probability of fraud and therefore reduce the cost of fraudulent transactions' reimbursement the merchant, at the same time, these systems create an increased percentage of lost sales as a result of the fraud screening. Indeed, these existing fraud screening systems do not provide a seamless fraud strategy that comprehensively minimizes the cost of fraud liability, the cost of manual fraud processing (handling of chargebacks and reviews), and the cost of lost sales.

### SUMMARY

In general, a method and system for rendering a fraud decision procession for an online transaction is provided. The decision system, based on fraud screening outputs (probability of fraud for a predictive fraud screening, or accept, reject, challenge for a non-predictive one) makes a set of decisions (accept, reject, gather more information) until a final decision is reached (accept, reject).

The system may include a server that receives a transaction request and performs a first fraud screening based on transaction information of the requested transaction. The server may further perform, based on the result of the first fraud screening, one of the following operations (1): issuing an allowance of the requested transaction, issuing a rejection of the requested transaction, or gathering more information. Depending on the results of this first information gathering, the server may further perform one of the following operations (2): issuing an allowance of the requested transaction, issuing a rejection of the requested transaction, or gathering more information - second information gathering. Depending on the results of this second information gathering, the server may further perform one of the following final operations (3): issuing an allowance of the requested transaction, issuing a rejection of the requested transaction.

In the case where the fraud screening is of a predictive type, the computer-implemented fraud decision system can generate a decision of which operation to perform at points (1) (2) and (3) based at least on the initial probability of fraud output by the fraud screening system and the results of information gathering.

In the case where the fraud screening is not of a predictive type, the computer-implemented system can generate a decision of which operation to perform at points (1) (2) and (3) based on three calls to the fraud screening system, whose rules include as criteria the results of information gathering.

In one aspect, a computer-implemented fraud decision system includes a server communicating with a terminal and a computer readable medium. The computer-implemented fraud decision system can receive a transaction request, perform a first fraud screening based on transaction information of the requested transaction, and determine whether to gather more information based at least on the transaction information of the requested transaction.

In certain embodiments, the transaction information can include at least one of the following: a value of the requested transaction and a vendor code. The vendor code may, e.g., indicate whether the card is a Visa®, Mastercard®, or American Express® card.

In certain embodiments, in the case of predictive fraud screening, the decisions at points (1), (2) or (3) can be further based on at least one of the following factors: a cost for processing a chargeback, a cost for gathering more information, a cost of lost sales for a false fraud detection, a probability of causing a timeout for an action performed as part of the information gathering, a false negative rate and a false positive rate of the information gathering process.

In certain embodiments, the information gathering can be an authentication of a payment instrument of the requested transaction.
In certain embodiments, the first information gathering can be a 3-D Secure® authentication.
In certain embodiments, the first or the second information gathering can be a manual review performed by an agent.
In certain embodiments, there could be more than two information gathering operations before a final acceptance or rejection decision is made.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The details of one or more embodiments are set forth in the following detailed description of the invention and the accompanying drawings. Other objectives, features, and advantages of the invention will be more readily understood upon consideration of the following Detailed Description of the invention, taken in conjunction with the accompanying drawings, and with the claims.

### DESCRIPTION OF THE DRAWINGS

The present invention is further described in the detailed description which follows, in reference to the noted plurality of drawings by way of non-limiting examples of certain embodiments of the present invention, in which like numerals represent like elements throughout the several views of the drawings, and wherein:
FIG. 1 illustrates a fraud screening system.
FIG. 2 illustrates a flow diagram of the predictive fraud screening system.
FIG. 3 illustrates a payment instrument authentication system.
FIG. 4 illustrates a flow diagram of the payment instrument authentication system.
FIG. 5 illustrates an embodiment of the present invention incorporating fraud screening and different types of information gathering such as the 3-D Secure® authentication.
FIG. 6 illustrates an operation flow of predictive fraud screening processing.

### DETAILED DESCRIPTION

A detailed explanation of the system and method according to the preferred embodiments of the present invention are described below.

The embodiments may take the form of a hardware embodiment, a software embodiment, or an embodiment combining software and hardware. In one embodiment, the present invention takes the form of a computer-program product that includes computer-useable instructions embodied on one or more computer-readable media.

The various fraud screening techniques, methods, and systems described herein can be implemented in part or in whole using computer-based systems and methods. Additionally, computer-based systems and methods can be used to augment or enhance the functionality described herein, increase the speed at which the functions can be performed, and provide additional features and aspects as a part of or in addition to those described elsewhere in this document. Various computer-based systems, methods and implementations in accordance with the described technology are presented below.

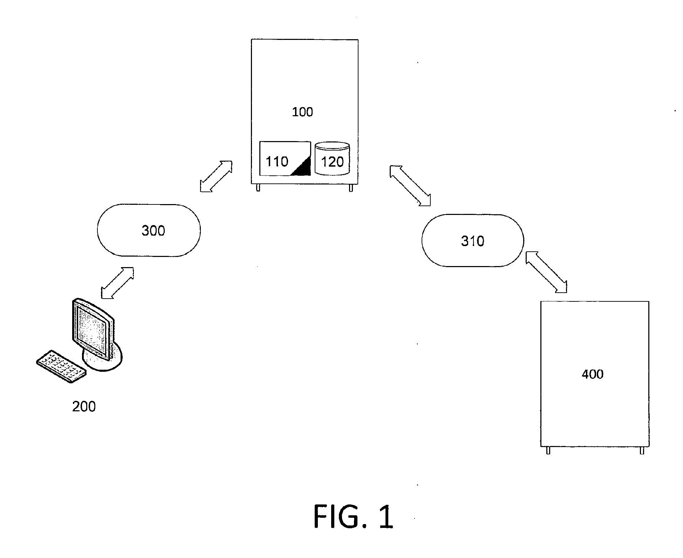

Referring to the computer-implemented fraud screening system of FIG 1, the server 100, the client device, which may be a terminal 200, and the processor 110 may include a general-purpose computer and can have an internal or external memory for storing data and programs such as an operating system (e.g., DOS, Windows 2000™, Windows XP™, Windows NT™, OS/2, UNIX or Linux) and one or more application programs. Examples of application programs include computer programs implementing the techniques described herein for lyric and multimedia customization, authoring applications (e.g., word processing programs, database programs, spreadsheet programs, or graphics programs) capable of generating documents or other electronic content; client applications (e.g., an Internet Service Provider (ISP) client, an e-mail client, or an instant messaging (IM) client) capable of communicating with other computer users, accessing various computer resources, and viewing, creating, or otherwise manipulating electronic content; and browser applications (e.g., Microsoft's Internet Explorer) capable of rendering standard Internet content and other content formatted according to standard protocols such as the Hypertext Transfer Protocol (HTTP). One or more of the application programs can be installed on the internal or external storage of the general-purpose computer. Alternatively, in another embodiment, application programs can be externally stored in or performed by one or more device(s) external to the general-purpose computer.

In addition, client device, which may be a terminal 200 may be or can include a desktop computer, a server, a laptop computer or other mobile computing device, a network-enabled cellular telephone (with or without media capturing/playback capabilities), wireless email client, or other client, machine or device to perform various tasks including Web browsing, search, electronic mail (email) and other tasks, applications and functions.

The general-purpose computer may include a central processing unit (CPU) for executing instructions in response to commands, and a communication device for sending and receiving data. One example of the communication device is a modem. Other examples include a transceiver, a communication card, a satellite dish, an antenna, a network adapter, or some other mechanism capable of transmitting and receiving data over a communications link through a wired or wireless data pathway.

The general-purpose computer may also include an input/output interface that enables wired or wireless connection to various peripheral devices. Examples of peripheral devices include, but are not limited to, a mouse, a mobile phone, a personal digital assistant (PDA), a keyboard, a display monitor with or without a touch screen input, and an audiovisual input device. In another implementation, the peripheral devices may themselves include the functionality of the general-purpose computer. For example, the mobile phone or the PDA may include computing and networking capabilities and function as a general purpose computer by accessing a network and communicating with other computer systems. Examples of a network, such as network 300, include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data. A communications link can include communication pathways that enable communications through one or more networks.

In one implementation, a processor-based system of the general-purpose computer can include a main memory, preferably random access memory (RAM), and can also include a secondary memory, which may be a tangible computer-readable medium 120. The secondary memory can include, for example, a hard disk drive or a removable storage drive, representing a floppy disk drive, a magnetic tape drive, an optical disk drive (Blu-Ray, DVD, CD drive), magnetic tape, paper tape, punched cards, standalone RAM disks, Iomega Zip drive, etc. The removable storage drive can read from or write to a removable storage medium. A removable storage medium can include a floppy disk, magnetic tape, optical disk (Blu-Ray disc, DVD, CD) a memory card (CompactFlash card, Secure Digital card, Memory Stick), paper data storage (punched card, punched tape), etc., which can be removed from the storage drive used to perform read and write operations. As will be appreciated, the removable storage medium can include computer software or data.

In alternative embodiments, the secondary memory can include other similar means for allowing computer programs or other instructions to be loaded into a computer system. Such means can include, for example, a removable storage unit and an interface. Examples of such can include a program cartridge and cartridge interface (such as the found in video game devices), a removable memory chip (such as an EPROM or PROM) and associated socket, and other removable storage units and interfaces, which allow software and data to be transferred from the removable storage unit to the computer system.

Referring to FIG. 1, network 300 can also include a communications interface that allows software and data to be transferred between terminal 200, server 100, and the other components shown in system 100. The system components may also be stand-alone components that can communicate with each other, a centralized server 100, and/or the client device over network 300. Examples of communications interfaces can include a modem, a network interface (such as, for example, an Ethernet card), a communications port, and a PCMCIA slot and card. Software and data transferred via a communications interface may be in the form of signals, which can be electronic, electromagnetic, optical or other signals capable of being received by a communications interface. These signals may be provided to a communications interface via a channel capable of carrying signals and can be implemented using a wireless medium, wire or cable, fiber optics or other communications medium. Some examples of a channel can include a phone line, a cellular phone link, an RF link, a network interface, and other suitable communications channels.

In this document, the terms "computer program medium" and "computer readable medium" are generally used to refer to media such as a removable storage device, a disk capable of installation in a disk drive, and signals on a channel. These computer program products may provide software or program instructions to a computer system.

Computer-readable media include both volatile and nonvolatile media, removable and non-removable media, and contemplate media readable by a database, a switch, and various other network devices. Network switches, routers, and related components are conventional in nature, as are means of communicating with the same. By way of example, and not limitation, computer-readable media include computer-storage media and communications media.

Computer-storage media, or machine-readable media, include media implemented in any method or technology for storing information. Examples of stored information include computer-useable instructions, data structures, program modules, and other data representations. Computer-storage media include, but are not limited to RAM, ROM, EEPROM, flash memory or other memory technology, CD-ROM, DVD, holographic media or other optical disc storage, magnetic cassettes, magnetic tape, magnetic disk storage, and other magnetic storage devices. These memory components can store data momentarily, temporarily, or permanently.

Communications media typically store computer-useable instructions - including data structures and program modules - in a modulated data signal. The term "modulated data signal" refers to a propagated signal that has one or more of its characteristics set or changed to encode information in the signal. An exemplary modulated data signal includes a carrier wave or other transport mechanism. Communications media include any information-delivery media. By way of example but not limitation, communications media include wired media, such as a wired network or direct-wired connection, and wireless media such as acoustic, infrared, radio, microwave, spread-spectrum, and other wireless media technologies. Combinations of the above are included within the scope of computer-readable media.

Computer programs may be associated with applications, which may be stored in the main memory or secondary memory. Such computer programs can also be received via a communications interface. Such computer programs, when executed, may enable the computer system to perform the features as discussed herein. In particular, the computer programs, when executed, may enable the processor to perform the described techniques. Accordingly, such computer programs may represent controllers of the computer system.

In an embodiment where the elements are implemented using software, the software can be stored in, or transmitted via, a computer program product and loaded into a computer system using, for example, a removable storage drive, hard drive or communications interface. The control logic (software), when executed by the processor, may cause the processor to perform the functions of the techniques described herein.

In another embodiment, the elements may be implemented primarily in hardware using, for example, hardware components such as PAL (Programmable Array Logic) devices, application specific integrated circuits (ASICs), or other suitable hardware components. Implementation of a hardware state machine so as to perform the functions described herein will be apparent to a person skilled in the relevant art(s). In yet another embodiment, elements may be implanted using a combination of both hardware and software.

Referring to FIG. 1, the computer-based methods can be accessed or implemented over the World Wide Web by providing access via a Web Page to the methods described herein. Accordingly, the Web Page may be identified by a Universal Resource Locator (URL). The URL may denote both a server and a particular file or page on the server. In this embodiment, it is envisioned that a client computer system, which may be the client device 106, may interact with a browser to select a particular URL, which in turn may cause the browser to send a request for that URL or page to the server identified in the URL. Typically, the server may respond to the request by retrieving the requested page and transmitting the data for that page back to the requesting client computer system, which may be the client device 106 (the client/server interaction may be typically performed in accordance with the hypertext transport protocol or HTTP). The selected page may then be displayed to the user on the client's display screen. The client can then cause the server containing a computer program to launch an application, for example, to perform an analysis according to the described techniques. In another implementation, the server can download an application to be run on the client to perform an analysis according to the described techniques.

FIG. 1 illustrates a fraud screening system. A payment server 100 includes a processor 110 and a tangible computer-readable medium 120, such as a disk drive or a flash memory system. The tangible computer-readable medium 120 stores programming which directs the processor and the payment server 100 to perform functions discussed below. The server 100 communicates with a terminal 200 via, e.g., a network 300. The network 300 may be, e.g., the internet. The network 300 may also be a proprietary or local network. The payment server 100, by the operation of the processor 110 and tangible computer-readable medium 120, receives request for a transaction (e.g., buying an airline ticket) and transaction information from the terminal 200 via the network 300. The terminal 200 may be, e.g., a merchant terminal (e.g. airline sales terminal) or a merchant's server.

The payment server 100 communicates with a fraud screening service provider server 400 via, e.g., a network 310. The network 310 may be, e.g., the internet a proprietary network, or a local network. Upon receiving the request for transaction, the payment server 100 performs the fraud screening, by the operation of the processor 110 and tangible computer-readable medium 120, by communicating with the fraud screening service provider 400 via the network 310. Here, in particular, the payment server 100 performs the fraud screening by sending the requested transaction and transaction information to the fraud screening service provider server 400, and receives a result of the fraud screen from the fraud screening service provider server 400.

The fraud screening service provider server 400 transmits a result of the fraud screening back to the payment server 100. Based on the result, the payment server may issue to the terminal 200 a determination to allowing the requested transaction, rejecting the requested transaction, or requesting more information. In the case of gathering more information, the payment server 100 waits for additional information from the terminal 200.

In another embodiment, the payment server 100 includes the fraud screening provider server 400.

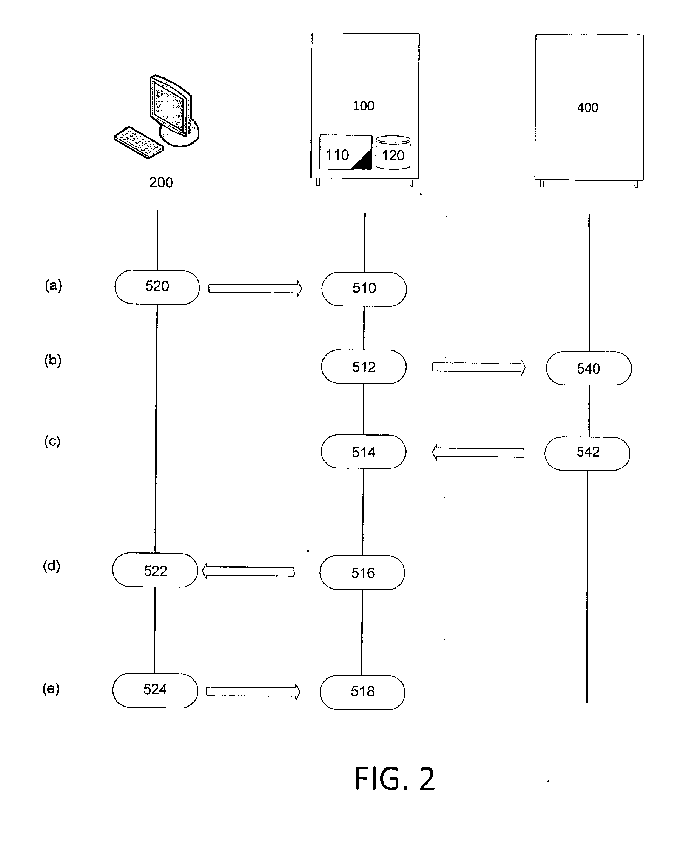

FIG. 2 illustrates a simplified flow diagram of the operations of the system shown in FIG. 1:
(a) The payment server 100 receives request for a transaction from the terminal 200 (520,510).
(b) The payment server 100 performs the fraud screening by transmitting the requested transaction and transaction information to the fraud screening service provider server 400 (512, 540).
(c) The fraud screening service provider server 400 sends the payment server 100 the result of the fraud screening (514, 542).
(d) The server transmits a determination of the fraud screening to the terminal 200 (522, 516). The determination may be one of allowing the requested transaction, rejecting the requested transaction, and requesting more information.
(e) In the case that the result determination is requesting more information, the terminal 200 sends additional information to the payment server 100 (524, 518).

One type of information gathering is the performing of a manual review by agents, performing some research on the payment instrument used or the cardholder.

Another type of information gathering is an authentication of the payment instrument, such as a credit card or debit card. An example of such type of authentication is the 3-D Secure® authentication protocol developed by Visa® and adopted by MasterCard®. In one implementation, a password is provided to the user for authentication. One added feature of this type of authentication is the shift in fraud cost. When the payment instrument is enrolled in the 3-D Secure® authentication program and that authentication is performed successfully, the cost of fraud reimbursement is shifted to the issuing bank of the instrument. Thus, merchants are willing to use the 3-D Secure® authentication.

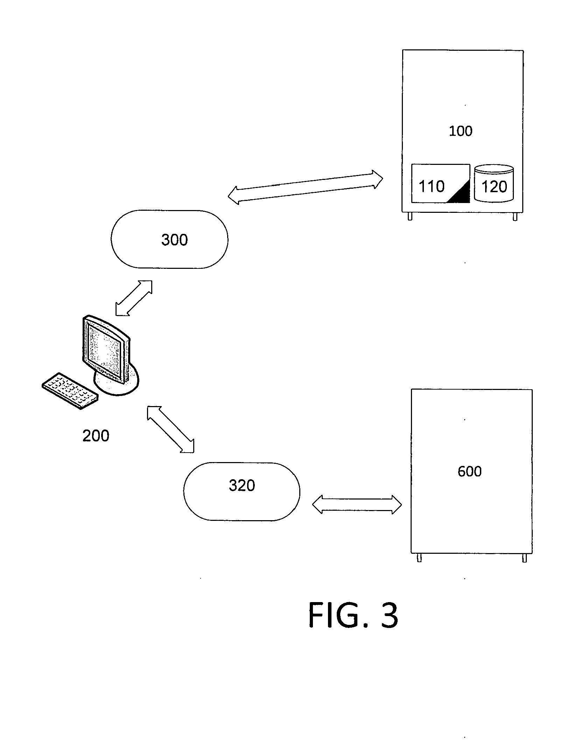

FIG. 3 illustrates one such fraud screening system based on 3-D Secure®. The system includes the terminal 200 communicating with an authentication service provider server 600, via a network 320. In 3-D Secure® authentication program, the authentication service provider server 600 may be the issuing bank of the payment instrument (e.g. credit card), or a service provider contracted by the issuing bank. The network 320 may be, e.g., the internet, a proprietary, or a local network.

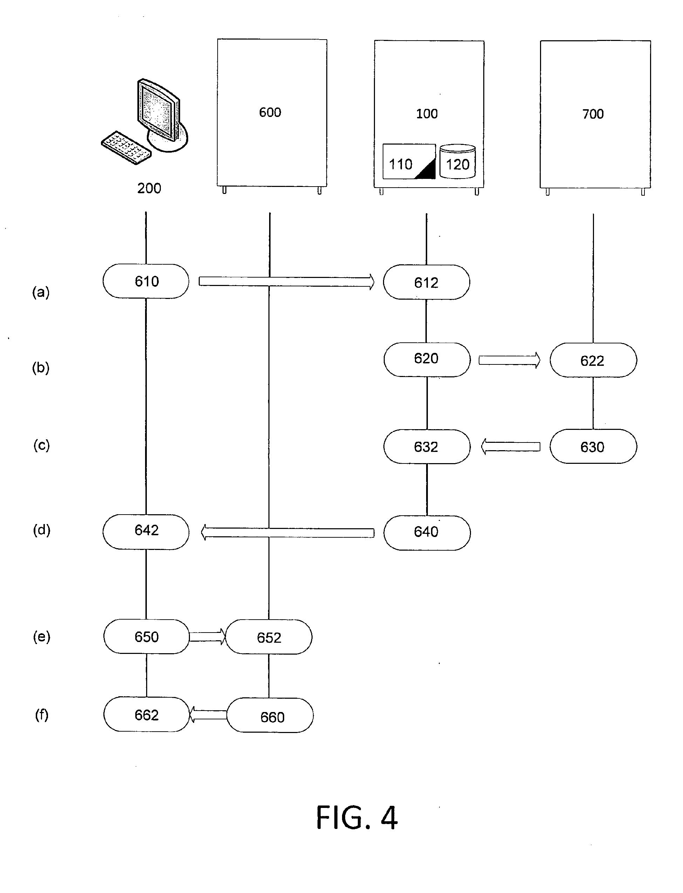

FIG. 4 illustrates a simplified flow diagram of the operations of the system shown in FIG. 3:
(a) The payment server 100 receives a request for a transaction from the terminal 200 (610,612).
(b) The payment server 100 communicates with a directory server 700 to check whether the payment instrument is enrolled in the 3-D Secure® authentication program (620, 622).
(c) The directory server 700 sends the check result to the payment server 100 (630, 632).
(d) The payment server 100 sends the check result back to the terminal 200 (640, 642).
(e) In the case that the payment is enrolled in the 3-D Secure® authentication program, the terminal 200 performs the authentication process by transmitting the authentication request to the authentication service provider server 600 (650, 652).
(f) The authentication service provider server 600 transmits the authentication result back to the terminal 200 (660, 662).
Comment: the authentication (steps e and f) is performed whenever the credit card is enrolled and no fraud screening is performed

In an embodiment, a system and method to incorporate fraud screening and different types of information gathering such as the 3-D Secure® authentication for each requested transaction.

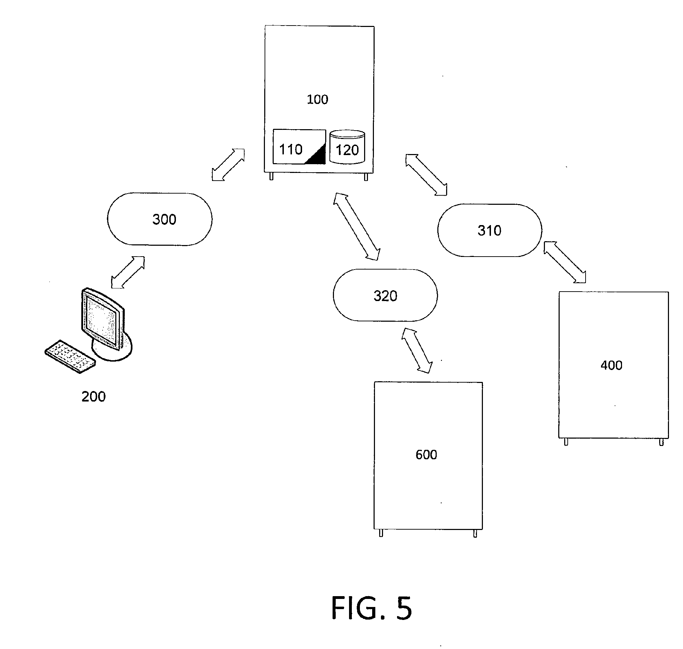

FIG. 5 illustrates a computer-implemented fraud decision system. A payment server 100 includes a processor 110 and a tangible computer-readable medium 120, such as a disk drive or a flash memory system. The tangible computer-readable medium 120 stores programming which directs the processor and the payment server 100 to perform functions discussed below. The server 100 communicates with a terminal 200 via, e.g., a network 300. The network 300 may be, e.g., the internet. The network 300 may also be a proprietary or local network.

The payment server 100 communicates with a fraud screening service provider server 400 via, e.g., a network 310. The network 310 may be, e.g., the internet a proprietary network, or a local network. The payment server 100 further communicates with an authentication service provider server 600, via a network 320. In 3-D Secure® authentication program, the authentication service provider server 600 may be the issuing bank of the payment instrument (e.g. credit card), or a service provider contracted by the issuing bank. The network 320 may be, e.g., the internet, a proprietary, or a local network.

The payment server 100, by the operation of the processor 110 and tangible computer-readable medium 120, receives request for a transaction (e.g., buying an airline ticket) and transaction information from the terminal 200 via the network 300. The terminal 200 may be, e.g., a merchant terminal (e.g. airline sales terminal) or a merchant's server.
Upon receiving the request for transaction, the payment server 100 performs the fraud screening, by the operation of the processor 110 and tangible computer-readable medium 120, by communicating with the fraud screening service provider 400 via the network 310. Here, in particular, the payment server 100 performs the fraud screening by sending the requested transaction information to the fraud screening service provider server 400, and receives a result of the fraud screening from the fraud screening service provider server 400. In another embodiment, the payment server 100 includes the fraud screening provider server 400. The system described above is applicable to both a predictive fraud screening system and a non-predictive fraud screening system.

In an embodiment, the fraud screening engine is a non-predictive fraud screening engine. The fraud screening service provider server 400 transmits a result of the fraud screening to the payment server 100. This result is a function of the rules of the fraud screening engine and the transaction information: it will either be "Accept", "Reject" or "Challenge".

The payment server 100 then transmits a determination of the fraud screening to the terminal 200. The determination may be one of allowing the requested transaction or rejecting the requested transaction if the fraud screening result is "Accept" or "Deny", or requesting more information through manual review or 3-D Secure® authentication if the fraud screening result is "Challenge." In the case of 3-D Secure®, steps (e) and (f) are executed and the response sent back to the payment server 100. In the case of a manual review, the manual review is performed and the result sent back to the payment server 100. The payment server 100 performs the fraud screening, by the operation of the processor 110 and tangible computer-readable medium 120, by communicating with the fraud screening service provider 400 via the network 310. Here, in particular, the payment server 100 performs the fraud screening by sending the requested transaction information and the results of information gathering to the fraud screening service provider server 400, and receives a result of the fraud screening from the fraud screening service provider server 400. The fraud screening service provider server 400 transmits a result of the fraud screening to the payment server 100. This result is a function of the rules of the fraud screening engine and the transaction information: it will either be "Accept", "Reject" or "Challenge". The payment server 100 then transmits a determination of the fraud screening to the terminal 200. The determination may be one of allowing the requested transaction or rejecting the requested transaction if the fraud screening result is "Accept" or "Deny", or requesting more information (a second time) through manual review if the fraud screening result is "Challenge" if the first information request was done through 3-D Secure®.

In another embodiment, the fraud screening engine is a predictive fraud screening engine.

The predictive fraud screening engine determines the probability of fraud based on transaction information such as the amount of the transaction, location of the sale, IP address of the requesting device. In an example of airline ticket purchase, the transaction information may further include the origin, destination, and time before departure.

The predictive fraud screening service provider server 400 transmits this probability to the payment server 100. The payment server 100 may then determine an operational flow. The determination includes (i) whether to perform 3-D Secure® authentication (3DS) and (ii) operations in response to the result of 3DS.

**Table I below includes the operations possible after the initial predictive fraud screening:**

| **Operation #** | **Perform 3DS?** | **If 3DS passes** | | **If 3DS fails** |
|---|---|---|---|---|
| 1 | No | | Allow | |
| 2 | Yes | | Allow | |
| 3 | Yes | Allow | | Manual review |
| 4 | Yes | | Manual review | |
| 5 | Yes | Allow | | Reject |
| 6 | Yes | Manual review | | Reject |
| 7 | No | | Reject | |
| 8 | No | | Manual review | |

An example of an operational flow after the initial predictive fraud screening may include operations # 1, 5, and 7. Further details of the determination process will be discussed below. Because the determination flow is made for each transaction and is based on the probability of fraud, the system may respond differently to two transactions, even when both transactions pass the 3DS authentication.

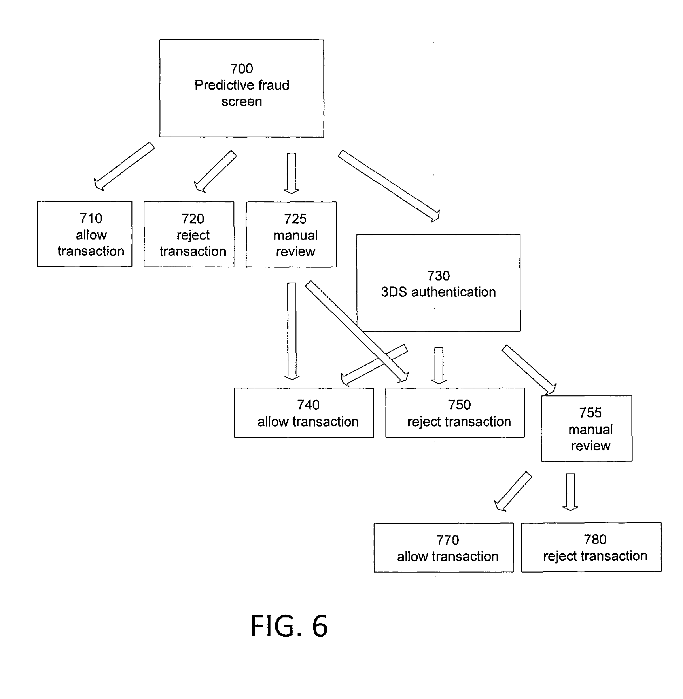

FIG. 6 illustrates predictive fraud processing of a requested transaction. At 700, the system performs the initial predictive fraud screening (e.g., payment server 100 communicates with the predictive fraud screening service provider 400) and receives a probability of fraud. Based on the probability of fraud and other transaction information, the operation flow of responses includes allowing the transaction (710; operation #1), rejecting the transaction (720; operation #7) without performing the 3DS authentication (730), and perform manual review (725; operation #8).

As a result for of the manual review, the system may determine to allow the transaction (740) or to reject the transaction (750).

The operation flow of responses further includes performing the 3DS authentication (730), and based on the result, allowing the transaction (740), rejecting the transaction (750), or performing manual review (755). This manual review (755) may result in allowing the transaction (770) or rejecting the transaction (780).

In one embodiment, to determine the operation flow may be based on the following variables:
**f** is the probability of fraud;
**cb** is the cost of processing a chargeback;
**li** is the cost of fraud liability;
**Is** is the cost of lost sales resulting from a falsely rejected transaction;
**ds** is the unit cost of processing a 3DS;
**mr** is the unit cost of processing a manual review;
**n** be the false negative rate of the manual review process; i.e. P(Good manual review result|Fraud);
**p** be the false negative rate of the manual review process; i.e. P(Bad manual review result|Not Fraud);
**T*(1-f)** is the probability of a timeout i.e. P(3DS=Time-out|Not Fraud)*(1-f);
**N** is the false negative rate of the manual review process in 3DS; i.e. P(3DS=OK|Fraud)
**P** is the false positive rate of the manual review process in 3DS; i.e. P(3DS=KO|Not Fraud)

Among these variables, the probability of fraud **f** is calculated by the predictive fraud screening engine based on the transaction information. The predictive fraud screening engine may output a probability of fraud to choose an optimal fraud screening strategy. Probabilities **n, N, p, P** and **T** may be based on statistical models with factors based on transaction information. The variables cb (cost for processing a chargeback), **ds** (cost for performing 3DS authentication), and **mr** (unit cost of processing a manual review) are known costs. The variable **li** (the cost of fraud liability) is the monetary value of the requested transaction. The variable **ls** (the cost of lost sales resulting from a falsely rejected transaction) is the lost profit margin of the requested transaction plus a percentage for future lost sales (certain customers never come back after being falsely rejected).

Based the above variables, a total cost of fraud for each operation may be calculated. Table 2 below provides one example of the total cost of fraud for each operation:

| **Operation #** | **Perform 3DS?** | **If3DS passes** | **If3DS fails** | **Total cost of fraud** |
|---|---|---|---|---|
| 1 | No | Allow | | f*(cb+li) |
| 2 | Yes | Allow | | ds+T*ls+f[cb+(1-N)li-T*ls] |
| 3 | Yes | Allow | Manual review | ds+P(mr+p*ls)+T*ls+f*((N+n-n*N)*cb+n(1-N)li+(1-N-P)mr-p*P*ls-T*ls) |
| 4 | Yes | Manual review | | ds+(T+p-T*p)*ls+(1-T)mr+f*(n*cb+n(1-N)*li-(T+p-T*p)*ls+T*mr) |
| 5 | Yes | Allow | Reject | ds+(P+T)ls+f*(N*cb-(P+T)*ls) |
| 6 | Yes | Manual review | Reject | ds+((1-p)(P+T)+p)ls+(1-P-T)mr + f*[N* n*cb-((1-p)(P+T)+p)ls-(1-P-T-N)mr] |
| 7 | No | Reject | | (1-f)*ls |
| 8 | No | Manual review | | f*[n*(cb+li)-p*ls] +p*ls+mr |

For example, for operation #1, when 3DS is not performed after the initial predictive fraud screening and the transaction is allowed, the total cost of fraud is the probability of fraud (**f**) multiplied by the sum of the cost of processing a chargeback (**cb**) and the cost of fraud liability (**li**). For operation #7, when 3DS is not performed after the initial predictive fraud screening and the transaction is rejected, the total cost of fraud is the probability of not fraud (1-**f**) multiplied by the cost of lost sales (**li**). Thus, based on the table above, payment server 100 can determine an operation flow that minimizes the cost of fraud utilizing the predictive fraud screening **f**.

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A computer-implemented fraud decision system comprising:
a server communicating with a terminal; and
a computer readable medium;
wherein the computer-implemented fraud decision system:
receives a transaction request;
performs a first fraud screening based on transaction information of the requested transaction; and
determines which operation to perform: whether to accept the transaction, reject it, or gather more information.

2. The computer-implemented fraud decision system of claim 1, wherein the transaction information includes at least one of the following: the value of the requested transaction, a vendor code.

3. The computer-implemented fraud decision system of claim 1 or claim 2, wherein the fraud screening is a predictive one, and wherein the determination for which operation to perform, i.e. to accept, reject or gather more information, is further based on at least one of the following factors: the initial probability of fraud output by the predictive fraud screening, a cost for processing a chargeback, a cost for gathering more information, a cost of lost sales for a false fraud detection, a probability of causing a timeout for an action performed as part of the information gathering, a false negative rate and a false positive rate of the information gathering process.

4. The computer-implemented fraud decision system of claim 1 or claim 2, wherein the fraud screening is a not predictive one, and wherein the determination for which operation to perform, i.e. to accept, reject or gather more information, is further based on fraud screening rules based on transaction information of the requested transaction.

5. The computer-implemented fraud decision system of claim 1 or claim 2, wherein if the decision was to gather more information, the system determines whether to accept the transaction, reject it, or gather more information a second time based on the transaction information and the results of information gathering.

6. The computer-implemented fraud decision system of claim 5, wherein the fraud screening is a predictive one, and wherein the decisions of the first operation to perform, i.e. to accept, reject or gather more information, and the second operation to perform, i.e. to accept, reject or gather more information a second time, are further based on at least one of the following factors: the initial probability of fraud output by the predictive fraud screening, a cost for processing a chargeback, a cost for gathering more information the first time, a cost for gathering more information the second time, a cost of lost sales for a false fraud detection, a probability of causing a timeout for an action performed as part of the information gathering, a false negative rate and a false positive rate of the information gathering process.

7. The computer-implemented fraud decision system of claim 5, wherein the fraud screening is a not predictive one, and wherein the determination for which first operation to perform, i.e. to accept, reject or gather more information, and which second operation to perform, i.e. to accept, reject or gather more information a second time, are further based on fraud screening rules based on transaction information of the requested transaction and on the results of the first information gathering.

8. The computer-implemented fraud decision system of claim 5, wherein if the second decision was to gather more information a second time, the system determines whether to accept the transaction or reject it based on the transaction information and the results of information gatherings.

9. The computer-implemented fraud decision system of claim 8, wherein the fraud screening is a predictive one, and wherein the decisions of the first operation to perform, i.e. to accept, reject or gather more information, the second operation to perform, i.e. to accept, reject or gather more information a second time, and the third operation to perform, i.e. to accept or reject, are further based on at least one of the following factors: the initial probability of fraud output by the predictive fraud screening, a cost for processing a chargeback, a cost for gathering more information the first time, a cost for gathering more information the second time, a cost of lost sales for a false fraud detection, a probability of causing a timeout for an action performed as part of the information gathering, a false negative rate and a false positive rate of the information gathering process.

10. The computer-implemented fraud decision system of claim 8, wherein the fraud screening is a not predictive one, and wherein the determination for which first operation to perform, i.e. to accept, reject or gather more information, which second operation to perform, i.e. to accept, reject or gather more information a second time, and which third operation to perform, i.e. to accept or reject, are further based on fraud screening rules based on transaction information of the requested transaction and on the results of the first and second information gatherings.

11. The computer-implemented fraud decision system of any of claims 5 to 8,
wherein the first information gathering is an authentication of a payment instrument of the requested transaction.

12. The computer-implemented fraud decision system of claim 11, wherein the authentication means is a 3-D Secure® authentication.

13. The computer-implemented fraud decision system of any of claims 5 to 12,
wherein the first or the second information gathering is a manual review of the requested transaction.

14. The computer-implemented fraud decision system of any of claims 5 to 13, wherein there are more than two possible rounds of information gathering before reaching a final decision, i.e. to accept or reject.
